# EUROPEAN PATENT APPLICATION

(11) **EP 3 772 373 A1**
(43) Date of publication of application: **10.02.2021**
(21) Application number: 19190081.0
(22) Date of filing: 05.08.2019
(51) Int. Cl.: B01L 3/00, B01L 9/06

(54) **FLUID CONTAINER COVER**

(71) Applicant: TECAN TRADING AG, 8708 Männedorf (CH)
(72) Inventor: OTT, Philipp, 8496 Steg (CH); SAGER, Adrian, 8708 Männedorf (CH); BRANDÉN, Lars Johan, 8630 Rüti (CH)
(74) Representative: Troesch Scheidegger Werner AG

(57) **Abstract**

A cover (1) for a fluid container (4) comprising an essentially plane cover plate (10) for closing at least one opening of at least one fluid container (4) and at least two ports (11,12), wherein each port (11,12) comprises a trough channel (110,120) extending through the entire thickness of the cover plate (10), wherein a fluid impermeable first membrane (2) is arranged over the entire cross section of the through channel (110) of the first port (11) and wherein an at least gas permeable second membrane (3;30) is arranged over the entire cross section of the through channel (120) of the second port (12).

## Description

### TECHNICAL FIELD OF THE INVENTION

The current invention relates to fluid container covers, particularly to contamination prevention covers or caps for containers for pharmaceutical, biotechnology, and laboratory liquid transfer applications. Such container can be tubes, vials, bottles, carboys or the like.

### DESCRIPTION OF THE RELATED ART

Known embodiments of such container covers or closures are used in the field of liquid handling. In this field, liquid handling tubes of different volume capacities are often used. In particular in the handling of liquids with biological material, such tubes are preferably plastic tubes for single use, as they help reducing the risk of contaminations with the biological material being involved. Routinely used liquid handling tubes are for example 1.5 ml, 15 ml, and 50 ml plastic tubes. Such liquid handling tubes are usually closable with a snap-on lid or with a screw cap. Lids or caps are required to avoid contamination of the sample within the respective tubes by surrounding particles or other contaminants. Their use is originally adapted for laboratory staff working on a laboratory bench, which are trained to apply a particular care also in the opening and closing process for avoiding such contaminations. However, the handling of lids or caps often difficult in liquid handling automation. There have been efforts in automating de- and recapping such liquid handling tubes, in particular of tubes comprising screw caps, however, the solutions are complicated and may still include a risk of contamination of the samples.

### SUMMARY OF THE INVENTION

In the current invention, a problem to be solved is the provision of a cover for containers that reduces the risk of contamination during liquid handling processes, i.e. during the dispensing, aspirating, mixing, separating, reacting of liquids in a container, alone or in combination with gases and/or solids.

This problem is solved by a cover with the features of claim 1. Further embodiments of the cover, of a set comprising such a cover and a container, a filling quantity measurement arrangement comprising such a set and measuring reception, as well as a method for determining the filling quantity of a fluid container with such a cover are defined by the features of further claims.

A cover for a fluid container according to the invention comprises an essentially plane cover plate for closing an opening of a fluid container and at least two ports. Each port comprises a trough channel extending through the entire thickness of the cover plate. A fluid impermeable first membrane is arranged over the entire cross section of the through channel of the first port and an at least gas permeable second membrane is arranged over the entire cross section of the through channel of the second port. With such a design, the risk of contamination is greatly reduced, ideally totally prevented. The cover plate can be made from polypropylene, which may be autoclaved at 15 PSI and 121°C (250°F) for 20 minutes. The first membrane can be a pierceable septum. Such a pierceable septum can be made from silicone or thermoplastic elastomer.

In one embodiment, the second membrane is permeable for gas and liquid. Such second membranes that are permeable for gas or gas and liquid can be designed as a mesh, a webbing, a fleece or the like. Such second membranes can be made from a hydrophilic, non-binding polyether sulfone. Such second membranes can have a mesh size, respectively a pore size of about 0.2 micrometers.

In one embodiment, a collar is provided on the circumference of the second port on an outer side of the cover plate, extending essentially perpendicular to the cover plate. Ideally, the cover plate and the collar are formed integrally in a single piece, e.g. by injection molding.

In one embodiment, the exterior surface of the collar of the second port is conical as such that the outer dimensions of the cross section of the collar decrease with an increasing distance from the cover plate. For example, the exterior surface of the collar can have the shape of a Luer-cone.

In one embodiment, the interior surface of the collar of the second port is conical as such that the inner dimensions of the cross section of the collar increase with an increasing distance from the cover plate. For example, the interior surface of the collar can have the shape of a Luer-cone.

In one embodiment, a fastening element is provided on the exterior surface of the collar of the second port. Such a fastening element can be a bulge, a latch, a notch or a thread. For example, the fastening element can a thread that is compatible with a Luer-Lock-System.

In one embodiment, a shoulder is formed in the through channel of the second port, the shoulder being flush with an outer surface of the cover plate.

In one embodiment, a third port with a through channel, extending through the entire thickness of the cover plate is provided, wherein the third port is membrane-free.

In one embodiment, a collar is provided on the circumference of the third port on an outer side of the cover plate, extending essentially perpendicular to the cover plate.

In one embodiment, the exterior surface of the collar of the third port is conical as such that the outer dimensions of the cross section of the collar decrease with an increasing distance from the cover plate. For example, the exterior surface of the collar can have the shape of a Luer-cone.

In one embodiment, the interior surface of the collar of the third port is conical as such that the inner dimensions of the cross section of the collar increase with an increasing distance from the cover plate. For example, the interior surface of the collar can have the shape of a Luer-cone.

In one embodiment, a fastening element is provided on the exterior surface of the collar of the third port. Such a fastening element can be a bulge, a latch, a notch or a thread. For example, the fastening element can a thread that is compatible with a Luer-Lock-System.

In one embodiment, a shoulder is formed in the through channel of the third port, the shoulder being flush with the outer surface of the cover plate.

In one embodiment, a holding plate is arranged on the inner side of the cover plate, wherein the first and/or second membranes are clamped between the cover plate and the holding plate and wherein the holding plate comprises through channels that are aligned with the corresponding through channels of the cover plate.

In one embodiment, the diameter of each through channel of the holding plate is the same size as or is smaller than the corresponding diameter of the through channel of the cover plate.

In one embodiment, a shoulder is formed in the through channel of the holding plate, on a channel end which is facing the cover plate.

In one embodiment, a funnel is formed in the through channel of the holding plate that is aligned with the through channel of the second port of the cover plate, on a channel end which is facing the cover plate.

In one embodiment, an aspiration tube is provided on a side of the holding plate facing away from the cove plate, extending from the holding plate, forming an extension of the through channel of the holding plate that is aligned with the through channel of the first port of the cover plate. For example, the aspiration tube is made from the same material as the cover plate.

The length of the aspiration tube can be designed as such, that in the assembled state with the fluid container, a free end of the aspiration tube, facing away from the holding plate, touches a bottom surface of the fluid container, at least partially.

The holding plate and the aspiration tube can be formed integrally in one piece.

The cover plate and the holding plate can be formed integrally in one piece. For example, the first and second membranes can be inserted in the casting mold before the cover plate and the holding plate are created simultaneously during injection molding.

In one embodiment, at least one recess is formed in the aspiration tube on its free end facing away from the holding plate. As such, in the assembled state of the cover with the container, at least one lateral opening is provided between the tip of the aspiration tube and the bottom of the container.

For example, several recesses can be formed in the aspiration tube. They can be equally distributed at the tip's circumference.

In one embodiment, a closed side wall which extends a multiple of the thickness of the cover plate from the circumference of the cover plate is provided. The side wall extends essentially perpendicular to the cover plate. The side wall can also extend at an angle with respect to the cover plate. For example, the cover plate and the side wall are formed integrally in one piece. In the assembled state, the side wall can be arranged on the outside of the container and forming a cap-style cover, or the side wall can be arranged on the inside of the container and forming a plug-style cover. For cap-style covers, the side wall can comprise slots that extend perpendicular to the cover plate, over at least a part of the height of the side wall. Alternatively, the side wall is not closed, i.e. comprises clips that extend essentially perpendicular to the cover plate.

In one embodiment, a fastening element provided on the inward facing surface of the side wall is provided. This fastening element can be part of a fastening system for single or multiple use. Meaning, the cover is designed for single or multiple use. Such a fastening element can be a bulge, a latch, a notch or a thread. For example, the side wall and the fastening element are formed integrally in one piece.

In one embodiment, one first port and two or more second ports are provided, wherein the two or more second ports are identical or different. The second ports can be different in shape or size. For example, small ports and bigger ports can be provided or ports with or without fastening elements can be provided.

In one embodiment, a gas permeable second membrane is arranged in at least one of the second ports and a gas and liquid permeable second membrane is arranged in at least one of the second ports. The second membranes can be separate from one another or they can be connected to one another with a common carrier. Alternatively, all second membranes can be formed integrally in one piece. This is possible with all second membranes being identical or with different second membranes. For example, a gas and liquid permeable second membrane can be coated partially to render the second membrane liquid impermeable in the coated areas. Alternatively, different second membranes can be connected to each other by means of an adhesive. It is also possible to create a single piece membrane with different properties in different areas, i.e. by a difference in the density of the meshing.

In one embodiment, the cover is designed as a plug that is inserted at least partially in the chamber of the container. A side wall is provided at the circumference of the outside surface of the cover plate. The side wall extends essentially perpendicular to the cover plate. Alternatively, the side wall is conical, wherein the outside diameter is reduced with an increasing distance to the cover plate. The plug-type cover can be thin-walled or full body.

The features of the above-mentioned embodiments of the cover can be used in any combination, unless they contradict each other.

A set according to the invention comprises a cover according to one of the preceding embodiments and at least one fluid container with at least one chamber for receiving fluids, wherein the cover is arranged as such that it completely covers at least one opening of the at least one fluid container. The cover can be fixed to the container by means of the fastening element. The container can be a test tube, a vial, a centrifuge tube, a conical centrifuge tube or any other known pharmaceutical, biotechnology or laboratory container. The container can have a single chamber or can have several chambers for receiving fluids. These multiple chambers can be formed in a common container body. Alternatively, several containers can be arranged in a rack and a common cover is arranged on all these containers. Accordingly, the cover comprises several first and second ports or first second and third ports that, in the assembled state, are aligned with the chambers or the containers. All first ports can be identical, or they can have different sizes or different first membranes. All second ports can be identical or can have different shapes, sizes or second membranes, as described above. The same is applicable for the third ports.

A filling quantity measurement arrangement according to the invention comprises a reception, a fluid container with a cover according to one of the previous embodiments, wherein the cover comprises the aspiration tube and an evaluation unit, wherein the aspiration tube of the cover reaches into the container. The evaluation unit is electro conductively connected to the aspiration tube and the reception . The evaluation unit is adapted to determine the filling quantity in the container based on the measured capacitance between the reception and the aspiration tube. In such an embodiment, the aspiration tube is made from an electroconductive material, for example, from an electroconductive polypropylene. The cover plate and or the side wall of the cover can be made from the same material and all parts can be electro conductively connected. Alternatively, an electrical contact can be arranged on the outside of the cover, the electrical contact being electro conductively connected to the aspiration tube.

A method for determining the filling quantity of a fluid container according to the invention comprises the steps of:
- providing a reception for a non-conductive fluid container and an evaluation unit that is electro conductively connected to the reception;
- arranging a non-conductive fluid container in the reception, wherein a cover according to one of the preceding embodiments where the cover comprises the electro conductive aspiration tube that reaches into the container, is arranged on the fluid container;
- connecting the evaluation unit electro conductively with the aspiration tube;
- measuring the capacitance between the reception and the aspiration tube;
- determining the filling quantity of the fluid container by evaluating the measured capacitance.

### BRIEF DESCRIPTION OF THE DRAWINGS

Embodiments of the current invention are described in more detail in the following with reference to the figures. These are for illustrative purposes only and are not to be construed as limiting. It shows
Fig. 1 a perspective view from above of a cover according to the invention, arranged above a container;
Fig. 2 a perspective view from below of the free end of the aspiration tube of the cover from Figure 1;
Fig. 3A a perspective view from above of a minimal embodiment of a cover according to the invention;
Fig. 3B a perspective view from below of the cover from Figure 3A;
Fig. 4 a section view of the cover of Figures 3A and 3B through its first and second port;
Fig. 5 a section view of the cover of Figure 1 through its first, second and third port;
Fig. 6 a perspective exploded view of the cover of Figure 1;
Fig. 7 a section view of the holding plate of Figures 5 and 6;
Fig. 8 a perspective view from above of the cover of Figure 1 with an aspirator arranged above the first port, with dispenser arranged at the second port and with a filter arranged at the third port;
Fig. 9 a section view of the cover of Figure 1 on a container, arranged in a reception;
Fig. 10 a section view of a plug-type cover through its first, second and third port; and
Fig. 11 a perspective explosion view from above of a multi-chamber container with a corresponding cover.

### DETAILED DESCRIPTION OF THE INVENTION

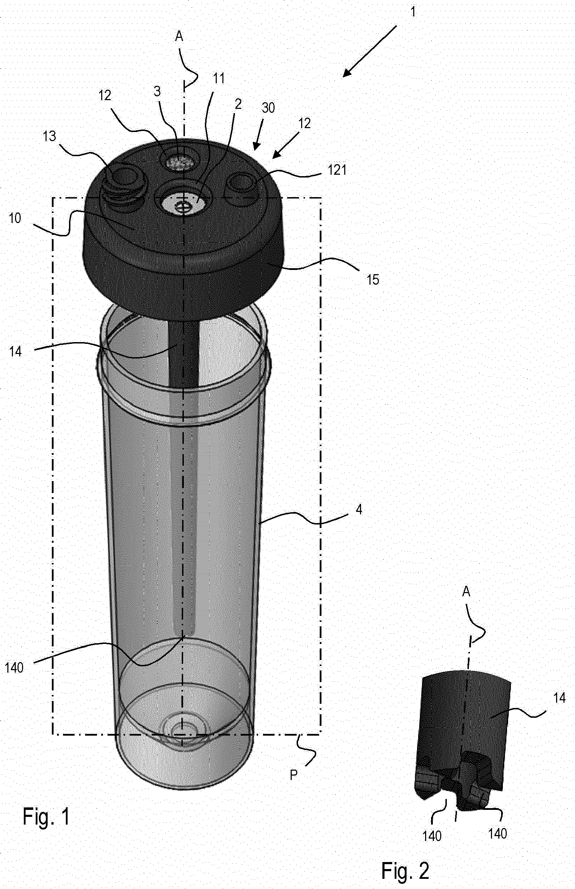

Figure 1 shows a perspective view from above of a cover 1 according to the invention, arranged above a container 4. The cover comprises an essentially plane cover plate 10, that extends over the entire cross-section of the opening of the container 4. A first port 11 is arranged in the center of the cover plate 10 that has a shape of a circular disk. The opening of the first port 11 is completely closed by a non-permeable first membrane 2. The depicted first membrane is a pierceable septum. Adjacent to the first port 11, two second ports 12 are arranged. In this figure, the second port 12 on the right comprises a collar 121. The second port 12 in the back is collarless. The opening of the second port 12 in the back is completely closed by a gas-permeable second membrane 3. The opening of the second port 12 on the right, although not shown in this figure, is completely closed by a gas and liquid permeable second membrane 30. Adjacent to the first port 11, a third port 13 is arranged. A closed side wall 15 extends from the circumference of the cover plate 10 on the opposite side of the ports 11,12,13 over a multiple of the thickness of the cover plate 10 in the direction of a central axis A.

Aligned with the first port 11, a aspiration tube 14 is provided on the side of the cover plate 10, opposite to the ports 11,12,13. The aspiration tube 14 extending over a multiple of the height of the side wall 15 of the cover 1, along the central axis A. Recesses 140 are formed on the free end of the aspiration tube 14, facing away from the cover plate 10, as depicted in Figure 2. There are four recesses 140 equally distributed around the circumference of the free end of the aspiration tube 14.

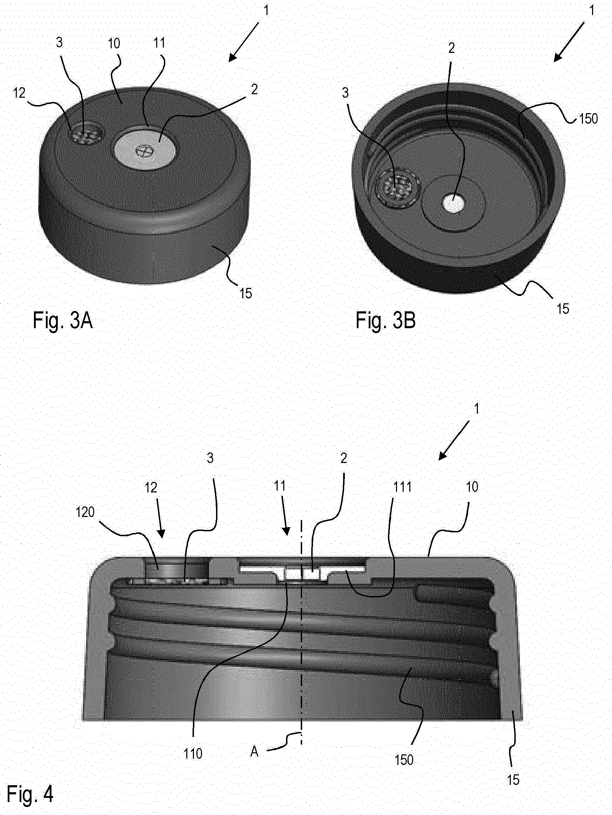

Figure 3A shows a perspective view from above of a minimal embodiment of a cover 1 according to the invention, Figure 3B shows a perspective view from below thereof and Figure 4 shows a section view of the cover through its first and second ports 11,12. In this embodiment, the cover comprises a cover plate 10 with a first port 11 and a second port 12. The first membrane 2 completely closes the opening of the first port 11, i.e. the first membrane 2 is arranged over the whole width of the through channel 110 of the first port 11. The first membrane 2 is arranged on a shoulder 111 in a recess of the cover plate 10. The first membrane 2 can be glued to the shoulder 111. The recess or the shoulder 111 being accessible from the outside of the cover 1. A second membrane 3 completely closes the opening of the second port 12, i.e. the second membrane 3 is arranged over the whole width of the through channel 120 of the second port. The second membrane 3 being arranged on the inside of the cover plate 10. The second membrane 3 can be attached to the inside of the cover plate 10 by vibration welding. A thread 150 is provided on the inside of the closed side wall 15 enabling the cover 1 to be screwed on a container with a complementary thread.

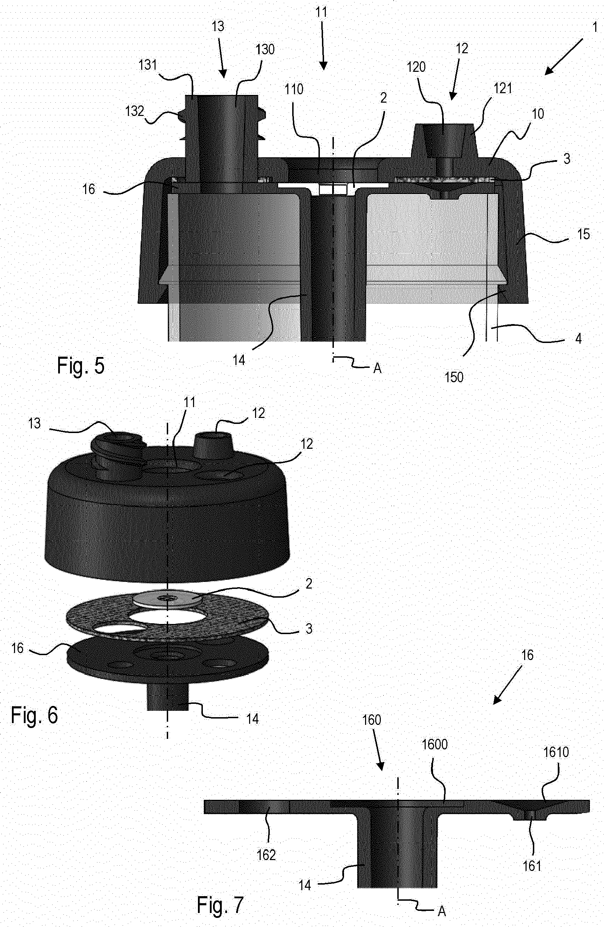

Fig. 5 a section view of the cover 1 of Figure 1 through its first port 11, its second port 12 and its third port 13, i.e. through the plane P of Figure 1. Figure 6 shows a perspective exploded view of the cover 1 of Figure 1. In contrast to Figure 1, in Figure 5, the cover 1 is arranged on the container 4. In the depicted embodiment, the cover plate 10 extends over the entire width of the container's opening. The side wall 15 extends from the cover plate 10 slightly slanted with respect to the axis A so that the inside diameter of the cover 1 near the lower rim of the side wall 15 is bigger than the one near the cover plate 10. In this embodiment, the fastening element 150 is a latch that can be mated with a corresponding latch of the container 4. At the first port 11, the first membrane 2 is arranged on the inside of the cover plate 10, extending over the entire diameter of the through channel 110. The first membrane 2 is disk-shaped and is pressed against a circumferential rim of the through channel 110 of the first port 11, located at the inside of the cover plate 10. A second port 12 is formed in the cover plate 10 adjacent to the first port 11. The second port 12 comprising a through channel 120 that extends over the whole thickness of the cover plate 10. On the outside of the cover 1, a collar 121 extends from the cover plate 10 towards the outside, said collar 121 being formed integrally with the cover plate 10. The outside surface and the inside surface of the collar 121 are tapered as such that the outside diameter of the collar is getting smaller with an increasing distance from the cover plate 10 and the inside diameter of the collar is getting bigger with an increasing distance from the cover plate 10. On the inside of the collar 121, a shoulder is formed, wherein the surface of the shoulder is flush with the outside surface of the cover plate 10. There is a third port 13 arranged adjacent to the first port 11, opposite to the second port 12. The third port 13 comprising a through channel 130 that extends over the entire thickness of the cover plate 10. On the outside of the cover 1, a collar 131 extends from the cover plate 10 towards the outside, said collar 131 being part of a pipe that extends through the cover plate 10. The pipe extends over the inside surface of the cover plate 10, forming a circumferential rim. On the outside surface of the collar 131 of the third port 13, a thread 132 is formed integrally with the collar 131. The third port 13 can be compatible with a Luer-lock-system. On the inside of the cover 1 a holding plate 16 is arranged, fixing the first membrane 2 and the second membrane 3 to the inside of the cover plate 10. The first membrane 2 is arranged in a recess 1600 of the holding plate 16. The second membrane 3 is an annular disc, essentially covering the inside surface of the cover plate 10. There is a cut-out in the second membrane 3, in the region of the third port 13.

Figure 7 shows a section view of the holding plate 16 of Figures 5 and 6. The holding plate 16 is disk-shaped and comprises a centric first through channel 160, a second through channel 161 adjacent to it and a third through channel 162 adjacent to the first through channel 160, opposite to the second through channel 161. On the side of the holding plate 16 fading the cover plate 10, a recess in the form of a shoulder 1600 is formed the circumference of the first through channel 160. On the same side of the holding plate 16, a funnel-shaped cut-out 1610 is formed at the circumference of the second through channel 161. On the opposite side of the holding plate 16, an aspiration tube 14 is formed integrally with the holding plate 16, extending away from the holding plate 16 in the direction of the axis A.

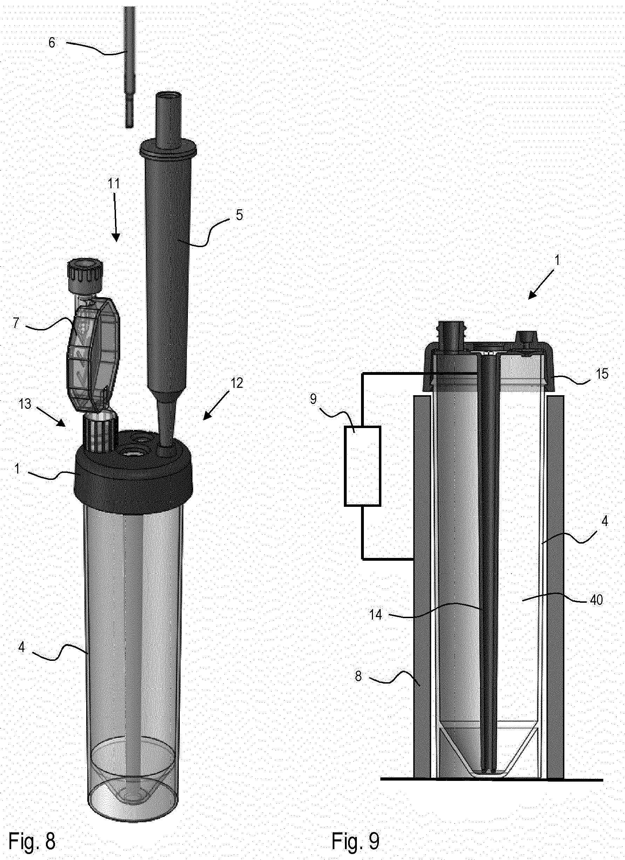

Figure 8 shows a perspective view from above of the cover 1 of Figure 1 with an aspirator 6 arranged above the first port 11, with dispenser 5 arranged at the second port 12 and with a filter 7 arranged at the third port 13 wherein the aspirator 6 is an aspiration needle and the dispenser 5 is a pipette. The filter 7 is screwed to the cover 1 at the third port 13.

Figure 9 shows a section view of the cover 1 of Figure 1 on a container 4, arranged in a reception 8. The container 4 being inserted into the reception 8 up to the cover 1, just below the lower rim of the side wall 15. The aspiration tube 14 is electro conductively connected to an evaluation unit 9, which is also electro conductively connected to the reception 8. The aspiration tube 14 represents the first electrode and the reception 8 represents the counter electrode. The liquid volume in the container can be determined by the evaluation unit 9 based on the measured electric capacitance between the aspiration tube 14 and the reception.

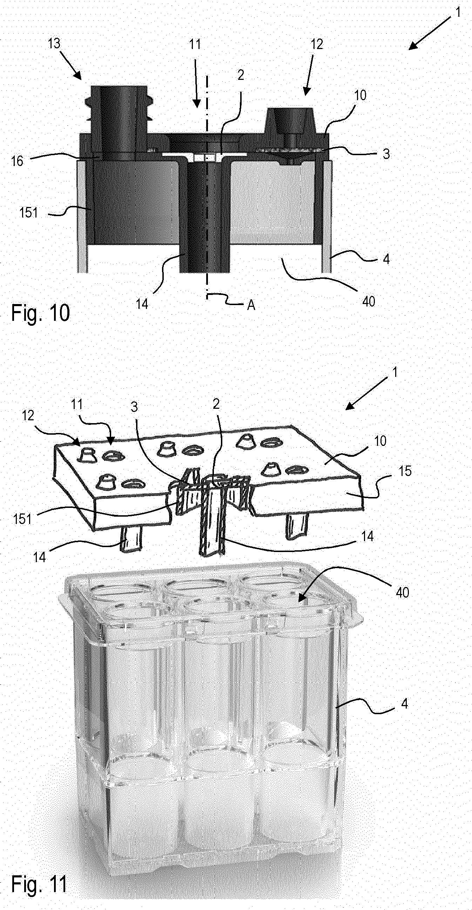

Figure 10 shows a section view of a plug-type cover 1 through its first port 11, its second port 12 and its third port 13. The depicted cover is a plug-type cover that is adapted to be plugged into the opening of a container 4. In contrast to the cap-type cover of Figures 1 and 3 to 6, the side wall 151 of the plug-type cover, in the assembled state, is arranged on the inside of the container 1, i.e. in a chamber 40 of the container. The outside surface of the side wall 151 of the cover 1 matches the inside surface of the chamber 40 of the container 4. Apart from the side wall, the plug-type cover is identical to the cap-type cover.

Figure 11 shows a perspective explosion view from above of a container 4 with a plurality of chambers 40 with a corresponding cover 1. Depicted is a multi-well plate 4 with six wells 40. Alternatively, a rack can be used, in which a plurality of containers can be arranged. In both embodiments, a multi cover as shown in Figure 11 can be used to cover tightly all of the chambers of the container or containers. Such a cover 1 comprises a common cover plate 10, wherein a plurality of first ports 11 with first membranes 2 and a plurality of second ports 12 with second membranes 3 are arranged as such that in the assembled state, the ports 11,12 are aligned with the corresponding chambers 40. Around each group of ports, corresponding to a chamber, on the inside surface of the cover plate 10, a side wall 151 extends away from the cover plate 10 into each chamber. Thus, all chambers are sealed-off from one another. Of course, all embodiments in connection with the cap-type cover can be realized as well with the multi cover 1. Instead of having the side wall 151, it would be possible to have a sealing ridge, extending from the cover plate. In this case, the sealing can take place in the opening region, i.e. the opening edge of each chamber or the sealing can take place on the common top surface of all chambers.

**REFERENCE SIGNS LIST**

| | | | |
|---|---|---|---|
| 1 | cover | 1600 | shoulder |
| 10 | cover plate | 161 | through channel |
| 11 | first port | 1610 | funnel |
| 110 | through channel | 162 | through channel |
| 111 | shoulder | 2 | first membrane |
| 12 | second port | 3 | second membrane |
| 120 | through channel | 30 | second membrane |
| 121 | collar | 4 | fluid container |
| 13 | third port | 40 | chamber |
| 130 | through channel | 5 | dispenser |
| 131 | collar | 6 | aspirator |
| 132 | thread | 7 | filter |
| 14 | aspiration tube | 8 | reception |
| 140 | recess | 9 | evaluation unit |
| 15 | side wall | | |
| 150 | fastening element | A | axis |
| 151 | side wall | P | plane |
| 16 | holding plate | | |
| 160 | through channel | | |

## Claims

1. A cover (1) for a fluid container (4) comprising an essentially plane cover plate (10) for closing at least one opening of at least one fluid container (4) and at least two ports (11,12), wherein each port (11,12) comprises a trough channel (110,120) extending through the entire thickness of the cover plate (10), **characterized in that** a fluid impermeable first membrane (2) is arranged over the entire cross section of the through channel (110) of the first port (11) and **in that** an at least gas permeable second membrane (3;30) is arranged over the entire cross section of the through channel (120) of the second port (12) .

2. The cover (1) according to claim 1, wherein the second membrane (30) is permeable for gas and liquid.

3. The cover (1) according to claim 1 or 2, wherein a collar (121) is provided on the circumference of the second port (12) on an outer side of the cover plate (10), extending essentially perpendicular to the cover plate (10) .

4. The cover (1) according to claim 3, comprising a fastening element provided on the exterior surface of the collar (121) of the second port (12).

5. The cover (1) according to one of the preceding claims, comprising a third port (13) with a through channel (130), extending through the entire thickness of the cover plate (10), wherein the third port (13) is membrane-free.

6. The cover (1) according to claim 5, wherein a collar (131) is provided on the circumference of the third port (13) on an outer side of the cover plate (10), extending essentially perpendicular to the cover plate (10).

7. The cover (1) according to claim 6, comprising a fastening element provided on the exterior surface of the collar (131) of the third port (13).

8. The cover (1) according to one of the preceding claims, wherein a holding plate (16) is arranged on the inner side of the cover plate (10), wherein the membranes (2,3;30) are clamped between the cover plate (10) and the holding plate (16) and wherein the holding plate (16) comprises through channels (160,161,162) that are aligned with the corresponding through channels (110,120,130) of the cover plate (10).

9. The cover (1) according to claim 8, wherein the diameter of each through channel (160,161,162) of the holding plate (16) is the same size as or is smaller than the corresponding diameter of the through channel (110,120,130) of the cover plate (10).

10. The cover (1) according to claim 8 or 9, wherein a shoulder (1600) is formed in the through channel (160) of the holding plate (16), on a channel end which is facing the cover plate (10).

11. The cover (1) according to one of claims 8 to 10, wherein a funnel (1610) is formed in the through channel (161) of the holding plate (16) that is aligned with the through channel (120) of the second port (12) of the cover plate (10), on a channel end which is facing the cover plate (10).

12. The cover (1) according to one of claims 8 to 11, wherein an aspiration tube (14) is provided on a side of the holding plate (16) facing away from the cove plate (10), extending from the holding plate (16), forming an extension of the through channel (160) of the holding plate (16) that is aligned with the through channel (110) of the first port (11) of the cover plate (10).

13. The cover (1) according to claim 12, wherein at least one recess (140) is formed in the aspiration tube (14) on its free end facing away from the holding plate (16).

14. The cover (1) according to one of the preceding claims, comprising a closed side wall (15;151) which extends a multiple of the thickness of the cover plate (10) from the circumference of the cover plate (10).

15. The cover (1) according to claim 14, comprising a fastening element (150) provided on the inward facing surface of the side wall (15).

16. The cover (1) according to one of the preceding claims, comprising one first port (11) and two or more second ports (12), wherein the two or more second ports (12) are identical or different.

17. The cover (1) according to claim 16, wherein a gas permeable second membrane (3) is arranged in at least one of the second ports (12) and wherein a gas and liquid permeable second membrane (30) is arranged in at least one of the second ports (12).

18. The cover (1) according to one of the preceding claims, wherein several first ports (11) and several second ports (12) and/or several third ports (13) are arranged on a common cover plate (10).

19. A set comprising a cover (1) according to one of the preceding claims and at least one fluid container (4), wherein the cover (1) is arranged as such that it completely covers at least one opening of the at least one fluid container (4).

20. A filling quantity measurement arrangement comprising a reception (8), a fluid container (4) with a cover (1) according to one of claims 12 to 18 and an evaluation unit (9), wherein the aspiration tube (14) of the cover (1) reaches into the container (4), wherein the evaluation unit (9) is electro conductively connected to the aspiration tube (14) and the reception (8), and wherein the evaluation unit (9) is adapted to determine the filling quantity in the container (4) based on the measured capacitance between the reception (8) and the aspiration tube (14).

21. A method for determining the filling quantity of a fluid container (4), comprising the steps of:
- providing a reception (8) for a non-conductive fluid container (4) and an evaluation unit (9) that is electro conductively connected to the reception (8);
- arranging a non-conductive fluid container (4) in the reception (8), wherein a cover (1) according to one of claims 14 to 19 is arranged on the fluid container (4), wherein the aspiration tube (14) of the cover (1) reaches into the container (4);
- connecting electro conductively the evaluation unit (9) with the aspiration tube (14);
- measuring the capacitance between the reception (8) and the aspiration tube (14);
- determining the filling quantity of the fluid container (4) by evaluating the measured capacitance.
